# FASCICULE DE BREVET EUROPEEN

(11) **EP 0 608 162 B1**
(45) Date de publication et mention de la délivrance du brevet: **04.03.1998**
(21) Numéro de dépôt: 94400075.1
(22) Date de dépôt: 12.01.1994
(51) Int. Cl.: H01G 7/02

(54) **Electret en SiO2 et son procédé de fabrication**
SiO2 Elektret und Verfahren zu dessen Herstellung
SiO2 electret and its manufacturing process

(30) Priorité: 14.01.1993 FR 9300297
(43) Date de publication de la demande: 27.07.1994
(73) Titulaire: Lewiner, Jacques, 92210 Saint-Cloud (FR); Perino, Dider, F-92500 Rueil Malmaison (FR)
(72) Inventeur: Lewiner, Jacques, 92210 Saint-Cloud (FR); Perino, Dider, F-92500 Rueil Malmaison (FR)
(74) Mandataire: Burbaud, Eric

(56) Documents cités:
- EP-A- 0 428 839
- 7TH INTERNATIONAL SYMPOSIUM ON ELECTRETS (ISE 7) 25 Septembre 1991 , BERLIN pages 663 - 668 PETER GÜNTHER ET AL. 'Annealing Effects in TSD-spectra of SiO2 electrets'

## Description

Les électrets, qui sont des diélectriques présentant de manière permanente une polarisation électrique, sont utilisés dans de nombreux dispositifs, tels que les microphones ou les relais électrostatiques.

L'invention concerne, parmi ces électrets, ceux qui sont constitués par une feuille ou couche mince de dioxyde de silicium SiO₂ chargée électriquement.

De tels électrets en SiO₂ présentent sur ceux constitués par des feuilles de polymère un certain nombre d'avantages et en particulier les suivants :
- ils résistent à des températures plus élevées,
- ils peuvent être réalisés en des épaisseurs plus petites, savoir inférieures à 10 microns,
- ils se prêtent plus facilement à une fixation solide sur un substrat, puisqu'ils peuvent être formés directement par voie chimique sur ce substrat, soit par par oxydation superficielle directe d'un substrat de silicium, soit par dépôt direct en phase vapeur, à partir d'un plasma approprié porteur de silicium et d'oxygène, sur un substrat solide qui peut être constitué en silicium ou en un matériau autre que le silicium.

Mais avec les modes de réalisation connus de ces électrets en SiO₂, la durée de vie est plus courte que celle des électrets en polymère, cette durée de vie n'excédant pas en général quelques mois.

Pour augmenter ladite durée de vie, il a été proposé de traiter chimiquement le SiO₂ avec de l'hexaméthyldisilazane (HMDS) avant de le charger électriquement, mais ce procédé est difficile à mettre en oeuvre et les résultats restent insuffisants.

Dans le cas où la couche de SiO₂ destinée à constituer l'électret est obtenue par oxydation superficielle directe d'un substrat de silicium, il a également été proposé d'étudier l'influence, sur la durée de vie de l'électret futur, d'un chauffage de ladite couche de SiO₂ avant charge électrique de celle-ci (article de Günther et al., paru aux pages 663-668 des Comptes rendus du 7ème Symposium International sur les électrets, "ISE 7", Berlin, septembre 1991).

Ces études ont montré que le préchauffage en question n'augmente guère ladite durée de vie : bien au contraire, pour certains de ces électrets, l'influence dudit préchauffage sur la stabilité de la charge de l'électret est une "considérable réduction" de cette stabilité.

L'invention permet d'atteindre effectivement le but explicité ci-dessus, savoir une augmentation considérable de la durée de vie des électrets en SiO₂.

A cet effet, les procédés pour fabriquer un électret en SiO₂ selon l'invention comprennent encore une première étape consistant à former une couche de SiO₂ sur un substrat solide par dépôt direct en phase vapeur à partir d'un plasma porteur de silicium et d'oxygène, et ils sont essentiellement caractérisés en ce que l'on traite thermiquement la couche ainsi formée en la chauffant à une température supérieure à 100°C pendant un temps supérieur à 1 heure, avant de la charger électriquement.

Dans des modes de réalisation avantageux, on a recours en outre à l'une et/ou à l'autre des dispositions suivantes :
- le plasma ci-dessus contient de l'hydrogène,
- la couche de SiO₂ est formée à partir d'un plasma constitué par un mélange de deux composants en phase vapeur qui sont respectivement le silane (SiH₄) et le protoxyde d'azote (N₂O) et la réaction chimique de ces deux composants est effectuée dans une enceinte où règne un champ électrique à haute fréquence et une pression comprise entre 0,1 et 1,5 millibars en présence d'un substrat chauffé, de préférence à une température de l'ordre de 300°C,

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre schématiquement la première étape d'un procédé de fabrication d'électrets conformes à l'invention.

La figure 2 montre schématiquement la seconde étape de ce procédé.

Les figures 3 et 4 montrent schématiquement deux variantes de la troisième étape dudit procédé.

La figure 5 montre schématiquement un dispositif acoustique équipé d'un électret en SiO₂ selon l'invention.

La première étape du procédé de fabrication d'électrets fait intervenir une enceinte 1 à l'intérieur de laquelle on place deux électrodes 2 et 3 sous forme de plaques conductrices horizontales disposées l'une au-dessus de l'autre.

Ces deux plaques 2 et 3, qui constituent les bornes d'un condensateur, sont reliées à une source 4 d'énergie électrique à haute fréquence.

On place sur la plaque inférieure 2 un substrat 5 qui peut être constitué en tout matériau désirable, isolant, semi-conducteur ou conducteur, et qui est avantageusement constitué par une feuille métallique, par exemple en cuivre ou en acier.

L'enceinte 1 est reliée, par l'intermédiaire de respectivement deux vannes 6 et 7, à deux réserves 8 et 9 de composants gazeux A et B contenant respectivement du silicium et de l'oxygène.

La réaction chimique entre ces deux composants est effectuée dans l'enceinte 1 en y introduisant des volumes bien déterminés de chacun de ceux-ci à travers les vannes 6 et 7 et en excitant la source 4.

Cette réaction, qui est du type couramment désigné sous l'appellation "CVD" (en anglais : "Chemical Vapor Deposition") se traduit par un dépôt 10 de SiO₂ sur le substrat 5.

Dans un mode de réalisation ayant donné toute satisfaction,
- les composants A et B étaient respectivement du silane (SiH₄) et du protoxyde d'azote (N₂O),
- la fréquence F était égale à 13,56 MHz,
- la pression régnant dans l'enceinte 1 était comprise entre 0,1 et 1,5 millibars,
- et le substrat 5 était chauffé à une température de l'ordre de 300°C, notamment par un chauffage électrique de la plaque 2.

Le composant chimique autre que le SiO₂ résultant de la réaction chimique effectuée était dans l'exemple donné un gaz N₂H₂ qui était évacué.

L'épaisseur du dépôt 10 est contrôlable en fonction du temps : la vitesse du dépôt était de l'ordre de 5000 à 10000 Å/mn dans l'exemple donné ci-dessus.

On arrête le processus, en coupant l'excitation de la source 4, lorsque ladite épaisseur a atteint une valeur comprise entre 0,5 et 3 microns.

Si l'on charge électriquement la couche déposée 10 à ce stade, l'expérience montre que la durée de vie de l'électret résultant est faible.

Pour accroître cette durée de vie, conformément à l'invention, on fait subir à l'ensemble du dépôt 10 et de son substrat 5 un traitement thermique qui consiste en un chauffage prolongé.

Ce chauffage est effectué à une température supérieure à 100°C pendant une durée supérieure à 1 heure.

Dans un mode de réalisation préféré, ledit chauffage est effectué dans un four 11 à une température de l'ordre de 150° pendant une durée de l'ordre de 48 heures.

C'est seulement après ce traitement thermique et refroidissement éventuel de l'ensemble du substrat 5 et de son revêtement 10 que ce dernier est chargé électriquement.

On peut utiliser à cet effet toute technique désirable connue de charge.

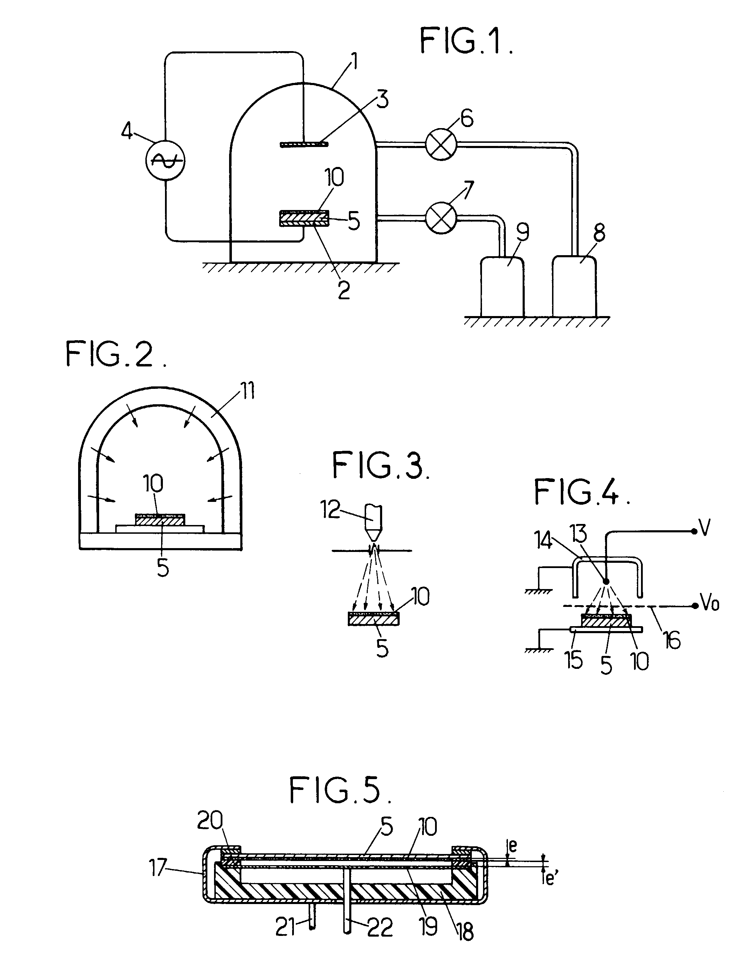

Par exemple, on peut faire appel à un canon à électrons 12 (figure 3) sous vide.

Selon une variante, la charge de l'électret est effectuée en faisant appel à la décharge avec effet "couronne" ou "Corona" réalisée à partir d'un fil conducteur 13 (figure 4) porté à un potentiel élevé V et disposé dans l'axe d'un tunnel 14 lui-même mis à la masse : l'ensemble du substrat 5 et de son revêtement 10 est disposé en regard dudit fil, sur un support conducteur 15 lui-même mis à la masse.

En outre, une fine grille 16 portée au potentiel V₀ équivalent désiré pour l'électret en cours de fabrication est interposée entre le fil 13 et le revêtement 10.

A titre indicatif, les potentiels V et V₀ sont égaux respectivement à -7000 Volts et à -200 Volts.

L'expérience montre que les électrets en SiO₂ résultant du chargement électrique d'un revêtement 10 lui-même fabriqué et traité thermiquement de la manière ci-dessus exposée présentent une durée de vie remarquablement longue, à savoir apparemment de l'ordre de plusieurs dizaines d'années, ce qui constitue un résultat tout à fait surprenant.

Une interprétation donnée à ce résultat surprenant est la suivante : en raison de sa formation par combinaison chimique de deux composants distincts, le dépôt de SiO₂ obtenu contient à titre de traces des atomes de substances autres que le silicium et l'oxygène, substances telles que l'hydrogène et l'azote, et ces atomes, emprisonnés au sein du dépôt effectué, y sont bloqués par le chauffage subséquent au point de constituer alors des "pièges" propres à retenir les charges électriques qui viennent les rejoindre ultérieurement.

Les applications des électrets en SiO₂ à vie longue ainsi obtenus sont à la fois nombreuses et importantes, en particulier du fait de leur très petite épaisseur.

Une telle application a été illustrée sur la figure 5, qui fait apparaître un dispositif acoustique du type des microphones ou haut-parleurs.

Ce dispositif comprend : un boîtier métallique 17 en forme de cuvette à profil en C qui contient une auge 18 en matériau isolant à profil en U, laquelle est elle-même refermée par une plaque métallique perforée 19 constituant une première électrode, cette plaque 19 supportant elle-même un anneau 20 en matériau isolant, puis l'ensemble d'un électret 10 et d'une feuille métallique tendue 5 constituant le substrat de cet électret et obturant l'ouverture du boîtier 17, auquel elle est connectée électriquement. Des broches 21 et 22 connectées électriquement au boîtier 17 et à la feuille 19 permettent de relier le dispositif à un circuit d'exploitation extérieur.

La très faible épaisseur de l'électret 10 est particulièrement intéressante dans une telle application.

En effet, si l'on appelle e ladite épaisseur de l'électret 10 et e' l'épaisseur de la couche d'air comprise entre cet électret 10 et l'électrode 19, la sensibilité du dispositif acoustique considéré est proportionnelle au champ électrostatique qui règne en absence de vibration entre les deux électrodes 10 et 19, champ qui est inversement proportionnel à l'épaisseur du condensateur formé par ces électrodes, c'est-à-dire à la fois à e et à e'.

Dans une variante du dispositif précédent, l'électret est placé contre la plaque-électrode 19, du côté en regard de l'électrode 5 : dans ce cas, la plaque 19 peut être un substrat en silicium et les perforations de cette plaque sont obtenues par tout procédé connu, par exemple par usinage chimique.

En suite de quoi et quel que soit le mode de réalisation adopté, on dispose d'électrets en SiO₂ dont la constitution et le mode de fabrication résultent suffisamment de ce qui précède.

Ces électrets présentent un certain nombre d'avantages par rapport à ceux antérieurement connus et en particulier ceux d'une très longue durée de vie, d'une très faible épaisseur, d'une adhérence très intime au substrat qu'ils recouvrent et d'une bonne résistance à la chaleur.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Procédé pour fabriquer un électret en SiO₂ comprenant une première étape consistant à former une couche de SiO₂ sur un substrat solide (5) par dépôt direct en phase vapeur à partir d'un plasma porteur de silicium et d'oxygène, caractérisé en ce que l'on traite thermiquement la couche ainsi formée (10) en la chauffant à une température supérieure à 100°C pendant un temps supérieur à 1 heure, avant de la charger électriquement.

2. Procédé selon la revendication 1, caractérisé en ce que le plasma contient de l'hydrogène.

3. Procédé selon la revendication 2, caractérisé en ce que la couche de SiO₂ est formée à partir d'un plasma constitué par un mélange de deux composants en phase vapeur qui sont respectivement le silane (SiH₄) et le protoxyde d'azote (N₂O) et en ce que la réaction chimique de ces deux composants est effectuée dans une enceinte où règne un champ électrique à haute fréquence et une pression comprise entre 0,1 et 1,5 millibars en présence d'un substrat chauffé, de préférence à une température de l'ordre de 300°C.

4. Electret en SiO₂ fabriqué par le procédé selon l'une quelconque des précédentes revendications, caractérisé en ce qu'il contient, à titre de traces, des atomes d'hydrogène.

## Patentansprüche

1. Verfahren zur Herstellung eines Elektrets aus SiO₂, umfassend einen ersten Schritt bestehend aus dem Bilden einer Schicht aus SiO₂ auf einem festen Substrat (5) durch direktes Abscheiden aus einer Gasphase ausgehend von einem Plasma, welches ein Träger für Silicium und Sauerstoff ist,
**dadurch gekennzeichnet,** daß man die so gebildete Schicht (10) wärmebehandelt, wobei man sie auf eine Temperatur von mehr als 100°C während einer Zeit von mehr als 1 Stunde erhitzt, bevor man sie elektrisch lädt.

2. Verfahren nach Anspruch 1,
**dadurch gekennzeichnet,** daß das Plasma Wasserstoff enthält.

3. Verfahren nach Anspruch 2,
**dadurch gekennzeichnet,** daß die Schicht aus SiO₂ ausgehend von einem Plasma gebildet wird, das ein Gemisch aus zwei Bestandteilen in der Gasphase darstellt, die Silan (SiH₄) bzw. Distickstoffoxid (N₂O) sind, und worin eine chemische Reaktion der beiden Bestandteile in einem Bereich bewirkt wird, wo ein elektrisches Feld mit hoher Frequenz und ein Druck zwischen 0,1 und 1,5 mbar herrscht, in Gegenwart eines bevorzugt auf eine Temperatur in der Größenordnung von 300°C erwärmten Substrats.

4. Elektret aus SiO₂, hergestellt nach einem der vorhergehenden Ansprüche,
**dadurch gekennzeichnet**, daß es in Spurenmengen Wasserstoffatome enthält.

## Claims

1. Process to make an electret in SiO₂ including a first step which consists of forming a layer of SiO₂ on a solid substrate (5), by direct deposition in vapor phase starting from a plasma containing silicon and oxygen characterized in that the layer so formed (10) is subjected to a thermal treatment by raising its temperature to above 100°C during a time period longer than 1 hour, before electrically charging it.

2. Process according to claim 1, characterized in that the plasma contains hydrogen.

3. Process according to claim 2, characterized in that the SiO₂ layer is formed from a plasma constituted by a mixture of two components in vapor phases which are respectively Silane (SiH₄) and Nitrogen protoxide (N₂O) and in that the chemical reaction between these two components is carried out in a vessel in which there is a high frequency electric field and a pressure between 0.1 and 1.5 millibars, in the presence of a heated substrate, preferably at a temperature of the order of 300°C.

4. Electret in SiO₂ made by the process according to any of the preceeding claims, characterized in that it contains, at very low concentration, atoms of hydrogene.
